**Europäisches Patentamt**

**European Patent Office**

**Office européen des brevets**

(19)

(11) Publication number: **0 233 851 B1**

# EUROPEAN PATENT SPECIFICATION

(12)

(45) Date of publication of the patent specification:
28.11.90

(51) Int. Cl.⁵: **C04B 37/02, B23K 31/12, B22F 7/06, B23B 27/14, E21B 10/46, C04B 35/56**

(21) Application number: 87850051.1

(22) Date of filing: 13.02.87

(54) Cutting element comprising a composite brazed to a stud.

(30) Priority: 19.02.86 US 830720

(43) Date of publication of application:
26.08.87 Bulletin 87/35

(45) Publication of the grant of the patent:
28.11.90 Bulletin 90/48

(84) Designated Contracting States:
BE DE FR GB SE

(56) References cited:
EP-A- 0 177 466
US-A- 4 156 329
US-A- 4 323 130

(73) Proprietor: **Strata Bit Corporation, 600 Kenrick Suite A1, Houston Texas 77060(US)**

(72) Inventor: **Dennis, Mahlon D., 2126 Riverlawn Drive, Kingwood Texas 66338(US)**

(74) Representative: **Taquist, Lennart et al, Sandvik AB Patents & Licences Fack, S-811 81 Sandviken 1(SE)**

## Description

The present invention relates to the fabrication of cutting elements, and particularly to cutting elements of the type in which a diamond layer is mounted on a carbide substrate.

One type of cutting element frequently used in rotary drilling operations in earth formations comprises an abrasive composite or compact mounted on a cemented carbide stud. Such a cutting element is known from US-A-43 23 130. The composite typically comprises a diamond disk ahdered to a cemented carbide substrate and the substrate is brazed to the stud. Mounting of the thus-formed cutting element in a drill bit is achieved by press-fitting the stud into pre-drilled holes in the drill bit.

Brazing of the composite onto the carbide stud is performed through the provision of a brazing substance interposed between the interface defined by the mutually facing carbide surfaces of the substrate and stud. During the brazing step, there typically occurs a migration of cobalt from the cemented carbide surfaces into the brazing substance. As a result, carbide surfaces adjacent the braze line will become cobalt deficient, resulting in a marked reduction in the fracture resistance of those surfaces.

Also, the brazing can produce residual stresses in the carbide surfaces. That is, the thermal expansion/contraction characteristics of the brazing material and carbide surfaces are markedly different, such that during a brazing operation, the brazing material tends to shrink relative to the cemented carbide surfaces and places those surfaces in tension. The magnitude of such tension is a function of the size of the area of the interfaces defined by the brazing material and the respective carbide surfaces.

It will be appreciated that the above discussed phenomena relating to cobalt deficiency and thermally-induced tension can significantly reduce the effective life span of a cutting element.

It is, therefore, an object of the present invention to minimize or obviate problems of the type discussed above.

Another object is to maximize the integrity of the bond between a composite and a stud to increase the effective life thereof.

A further object is to create a region in the carbide surface which is not cobalt diminished.

Yet another object is to reduce the thermally induced tension produced in the carbide.

These and other objects are achieved by the present invention which involves a method of forming a cutting element by brazing a cemented carbide substrate to a cemented carbide stud, wherein a surface of the substrate is adhered to a surface of the stud by a brazing substance disposed within an interface defined by those surfaces. In accordance with the present invention, brazing is prevented along a selected region of at least one of those surfaces within the interface.

Preferably, the selected region is provided with a substance which is non-wettable relative to the brazing substance.

The present invention also relates to a cutting element comprising a cemented carbide stud, and a composite including a cemented carbide substrate carrying a diamond layer. A surface of the substrate is brazed to a surface of the stud by a brazing material disposed within an interface defined by the surfaces. A region of at least one of the surfaces within the interface is provided with a substance which is non-wettable relative to the brazing material so that such one surface is not brazed at that region.

The objects and advantages of the present invention will become apparent from the following detailed description of preferred embodiments thereof in connection with the accompanying drawings in which like numerals designate like elements, and in which:

FIGURE I is a side elevational view of a cutting element formed in accordance with the present invention;

FIGURE 2 is a bottom plan view of a cemented carbide substrate, depicting areas covered by a substance which is non-wettable relative to the brazing material, in accordance with one embodiment of the present invention;

FIGURE 3 is a view similar to FIG. 2 depicting a modified arrangement of the non-wettable substance;

FIGURE 4 is a view similar to FIG. 2 of still another arrangement of the non-wettable substance; and

FIGURE 5 is a view similar to FIG. 2 of yet another arrangement of the non-wettable substance.

Depicted in FIG. I is a cutting element I0 comprising a composite or compact I2 mounted on a stud I4. The composite comprises a diamond layer I6 carried by a cemented carbide substrate I8, preferably tungsten carbide. The stud is also formed of cemented carbide, preferably tungsten carbide, or a high strength steel. A surface 22 of the substrate is brazed to a surface 20 of the stud by means of a layer 22 of a brazing substance disposed within the interface defined by those two surfaces. Any suitable brazing substance can be employed, such as a silver base alloy having a melting point less than 700°C so that the wetting of the tungsten carbide surface occurs at temperatures below those which would cause degradation of the diamond layer. Attention is directed to Daniels et al U.S. Patent No. 4,156,329 for a further disclosure regarding conventional brazing techniques and brazing alloys. Higher melting point alloys are suitable, if the diamond is cooled during brazing.

As noted earlier, the brazing step results in a depletion of cobalt from the adjacent carbide region of the substrate and the stud. However, in accordance with the present invention, a region of the surface of the substrate and/or stud within the interface is, prior to the brazing step, covered with a substance which is non-wettable by the brazing material. Thus, no brazing takes place in that region.

As a result, during the brazing step, there will occur no appreciable cobalt depletion from the region covered by the non-wettable material. Accordingly, that region will serve to minimize the overall reduction in fracture toughness which would otherwise occur in the carbide in the absence of the non-wettable substance.

Furthermore, there will occur no tensioning of the non-wetted region in response to thermally induced shrinkage of the brazing material during a cutting operation. It is also possible that by arranging the non-wettable material so as to form non-contiguous wetted areas (i.e., non-interconnected wetted areas), the tensioning stresses in the wetted areas may be made non-cumulative; that is, the resulting overall tension would simply correspond to the tension occurring in the highest tensioned one of the wetted areas.

Although the creation of a non-wetted region will result in a reduction in the overall bonding area between the substrate and the stud, that area will be ample for attaining the minimum bonding requirements. That is, the creation of a region of minimal cobalt depletion has a greater positive influence on the life of the cutting element than any negative influence resulting from a diminished bonding area.

The non-wettable substance may comprise known substances such as ceramics having a high temperature stability or metals having a melting point above the brazing temperature. Exemplary of suitable non-wettable substances are ceramic oxides, nitrides, and borides, although other suitable substances can be used such as tungsten metal. The substance can be brushed onto a selected region of the tungsten carbide surface 22 when non-wetting is desired.

Preferably, the ratio of non-wettable surface area to wettable surface area is in the range of from l to l2 and most preferably from l to 4+.

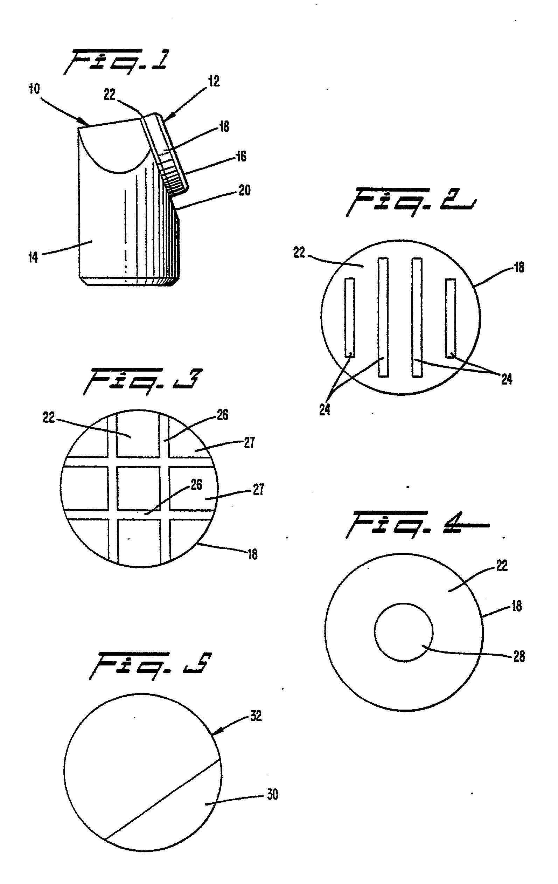

The configuration of the non-wettable region can vary. For example, that region could comprise a series of small areas 24 which are non-intersecting, as depicted in FIG. 2. Such areas 24 could extend all the way to the outer periphery of the surface 22, or stop short thereof as depicted in FIG. 2.

Alternatively, the non-wettable region could comprise intersecting areas 26 which terminate short of the periphery, or extend all the way thereto as depicted in FIG. 3.

Alternatively, the non-wettable region could comprise a single area such as a circular area 28 as depicted in FIG. 4.

Another arrangement is depicted in FIG. 5 wherein the non-wettable region comprises a chord 30 of the surface 32.

It might be desirable to configure the non-wettable region as a series of intersecting areas as depicted in FIG. 3 in order to divide the wettable region into non-contiguous areas 27. In that regard, the magnitude of the earlier-described residual stresses caused by the different thermal expansion/contraction characteristics of the brazing material and cemented carbide is a function of the size of the wetted region. It is possible, that if the wetted region is divided into non-contiguous areas, the residual stress occurring in those areas might be non-cumulative, whereby the overall residual stress is no greater than the maximum stress occurring in those areas. This theory has not yet been verified and should not be considered as limiting the present invention in any way.

It will be appreciated that by preventing brazing at a selected region, in accordance with the present invention, the occurrence of cobalt depletion at such region is prevented, and the occurrence of thermally induced residual stress at such region is prevented. Consequently, those regions will increase the overall fracture toughness of the cutting element and increase its effective lifespan.

## Claims

l. A method of forming a cutting element by brazing a cemented carbide substrate to a cemented carbide stud, wherein a surface of said substrate is adhered to a surface of said stud by a brazing substance disposed within an interface defined by said surfaces, characterised in that brazing is prevented along a selected region of at least one of said surfaces within said interface.

2. A method according to claim l, wherein said selected region is provided with a substance which is non-wettable relative to said brazing substance.

3. A method according to claim 2, wherein said non-wettable substance comprises a ceramic material.

4. A method according to claim 2, wherein said non-wettable substance comprises a metal having a melting temperature above the brazing temperature.

5. A method according to claim 2, wherein said region comprises a plurality of areas.

6. A cutting element comprising a cemented carbide stud, a composite including a cemented carbide substrate carrying a diamond layer, a surface of said substrate being brazed to a surface of said stud by a brazing material disposed within an interface defined by said surfaces, a region of at least one of said surfaces within said interface being provided with a substance which is non-wettable relative to said brazing material so that said at least one surface is not brazed at said region.

7. A cutting element according to claim 6, wherein said non-wettable substance comprises a ceramic material.

8. A cutting element according to claim 6, wherein said non-wettable substance comprises a metal having a melting point above the brazing temperature.

9. A cutting element according to claim 6, wherein said region comprises a plurality of areas.

10. A cutting element according to claim 9, wherein said areas comprise spaced non-intersecting strips covered by said non-wettable substance.

## Patentansprüche

1. Verfahren zur Herstellung eines Schneidelementes durch Anlöten eines Hartmetallsubstrates an einen Hartmetallbolzen, wobei eine Oberfläche des Substrates an einer Oberfläche des Bolzens durch ein Lötmaterial, das in einer durch diese Oberflächen definierten Grenzfläche angeordnet ist, anhaftet, dadurch gekennzeichnet, daß das Anlöten entlang einem ausgewählten Bereich wenigstens einer der Oberflächen in dieser Grenzfläche verhindert wird.

2. Verfahren nach Anspruch 1, bei dem der ausgewählte Bereich mit einer Substanz vorgesehen wird, die bezüglich des Lötmaterials nicht benetzbar ist.

3. Verfahren nach Anspruch 2, bei dem die nicht benetzbare Substanz ein keramisches Material umfaßt.

4. Verfahren nach Anspruch 2, bei dem die nicht benetzbare Substanz ein Metall mit einer Schmelztemperatur oberhalb der Löttemperatur umfaßt.

5. Verfahren nach Anspruch 2, bei dem der Bereich mehrere Teilbereiche umfaßt.

6. Schneidelement mit einem Hartmetallbolzen, einem Verbund mit einem Hartmetallsubstrat, das eine Diamantschicht trägt, wobei eine Oberfläche dieses Substrats an eine Oberfläche des Bolzens durch ein Lötmaterial angelötet ist, das in einer durch diese Oberflächen definierten Grenzfläche angeordnet ist, wobei ein Bereich wenigstens einer dieser Oberflächen in der Grenzfläche mit einer Substanz versehen ist, die bezüglich des Lötmaterials nicht benetzbar ist, so daß wenigstens eine Oberfläche in diesem Bereich nicht angelötet ist.

7. Schneidelement nach Anspruch 6, bei dem die nicht benetzbare Substanz ein Keramikmaterial umfaßt.

8. Schneidelement nach Anspruch 6, bei dem die nicht benetzbare Substanz ein Metall mit einem Schmelzpunkt oberhalb der Löttemperatur umfaßt.

9. Schneidelement nach Anspruch 6, bei dem der Bereich mehrere Teilbereiche umfaßt.

10. Schneidelement nach Anspruch 9, bei dem die Teilbereiche voneinander beabstandete, einander nicht schneidende Streifen umfaßt, die von der nicht benetzbaren Substanz bedeckt sind.

**Revendications**

1. Procédé de formation d'un élément de coupe par brasage d'un substrat en carbure cémenté sur un boulon en carbure cémenté, dans lequel est réalisé une adhérence d'une surface dudit substrat sur une surface dudit substrat sur une surface dudit boulon par une substance de brasage disposée à l'intérieur d'une interface définie par lesdites surfaces, caractérisé en ce que le brasage est empêché le long d'une zone choisie d'au moins l'une desdites surfaces à l'intérieur de ladite interface.

2. Un procédé selon la revendication 1, dans lequel ladite zone choisie comporte une substance qui est non mouillable par ladite substance de brasage.

3. Un procédé selon la revendication 2, dans lequel ladite substance non mouillable comprend une matière céramique.

4. Un procédé selon la revendication 2, dans lequel ladite substance non mouillable comprend un métal présentant une température de fusion supérieure à la température de brasage.

5. Un procédé selon la revendication 2, dans lequel ladite zone comprend plusieurs surfaces.

6. Un élément de coupe comprenant un boulon en carbure cémenté, un composite comportant un substrat cémenté en carbure portant une couche de diamant, une surface dudit substrat étant brasée sur une surface dudit boulon par une matière de brasage disposée à l'intérieur d'une interface définie par lesdites surfaces, une zone d'au moins une desdites surfaces à l'intérieur de ladite interface comportant une substance qui est non mouillable par ladite matière de brasage de sorte qu'au moins une surface n'est pas brasée dans ladite zone.

7. Un élément de coupe selon la revendication 6, dans lequel ladite substance non mouillable comprend une matière céramique.

8. Un élément de coupe selon la revendication 6, dans lequel ladite substance non mouillable comprend un métal présentant un point de fusion supérieur à la température de brasage.

9. Un élément de coupe selon la revendication 6, dans lequel ladite zone comprend plusieurs surfaces.

10. Un élément de coupe selon la revendication 9, dans lequel lesdites surfaces comprennent des bandes espacées sans intersection couvertes par ladite substance non mouillable.

*Fig.1*

10
22
12
18
16
20
14

*Fig.2*

22
18
24
24
24

*Fig.3*

22
26
27
27
26
27
18

*Fig.4*

22
18
28

*Fig.5*

32
30